(19) **Europäisches Patentamt / European Patent Office / Office européen des brevets**

(11) **EP 1 653 747 B1**

(12) **EUROPEAN PATENT SPECIFICATION**

(45) Date of publication and mention
of the grant of the patent:
**19.08.2015 Bulletin 2015/34**

(51) Int Cl.:
***H04N 21/43*** *(2011.01)*

(21) Application number: **05022773.5**

(22) Date of filing: **19.10.2005**

(54) **A system for clock recovery in digital video communication**

Vorrichtung zur Taktrückgewinnung in einer digitalen Videokommunikation

Système de récupération d'horloge dans une communication vidéo digitale

(84) Designated Contracting States:
**FR IT**

(30) Priority: **20.10.2004 IN de20522004**

(43) Date of publication of application:
**03.05.2006 Bulletin 2006/18**

(73) Proprietor: **STMicroelectronics International N.V.**
**1118 BH Luchthaven Schiphol (NL)**

(72) Inventors:
• **Saha, Kaushik**
**Delhi-110 054 (IN)**

• **Chakraborty, Chiranjib**
**Kolkata,**
**West Bengal- 700061 (IN)**
• **Chatterjee, Subrata**
**West Bengal - 723144 (IN)**

(74) Representative: **Bosotti, Luciano**
**Buzzi, Notaro & Antonielli d'Oulx S.r.l.**
**Via Maria Vittoria, 18**
**10123 Torino (IT)**

(56) References cited:
EP-A- 0 836 282     WO-A-01/93579
US-A- 5 767 746     US-A- 5 828 414
US-A- 5 883 924     US-A1- 2002 063 796

**Description**

Field of the invention

This invention relates to a system and method for clock recovery in digital video communication.

Background of the invention

In conventional digital video communication systems data is made available to the customers' home television set at the request or demand by the customer. Customers select a channel and enter a code into a box (widely known as set top box) at home, and the program gets delivered. Such universal video-on-demand requires massive amounts of audio/video data multiplexing. This multiplexing is done as per the MPEG 2 system standard (13818-1). Each set top box must receive data and then process it to produce a continuous-high-quality-audio/video-program.

In a Digital Video Broadcast (DVB) communication system audio/video data is transmitted in a transport stream. Decoding Time Stamp (DTS) and Presentation Time Stamp (PTS) specify the time instance at which the packet should be decoded and presented respectively. DTS and PTS are all referenced to the encoder's SYSTEM TIME CLOCK (STC) running at 27 MHz. Samples of STC clock known as PCR values are transmitted in transport stream packet at regular time interval to the decoder and the reference time is reconstructed by means of these clock samples and a standard Phase Locked Loop (PLL).

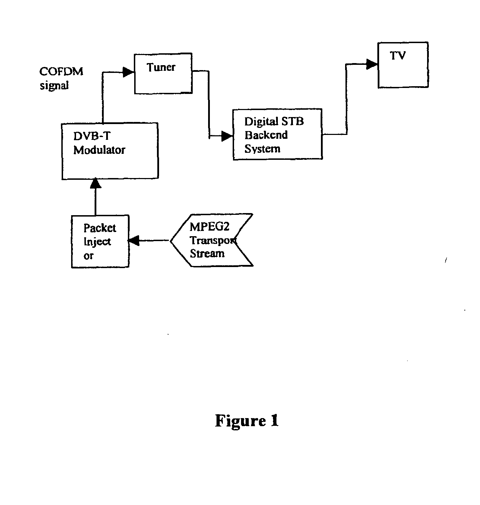

Figure 1 shows a conventional system setup for clock recovery application. Here, MPEG2 transport stream is fed to a DVB-T modulator via a transport stream packet injector. The modulator outputs Coded Orthogonal Frequency Division Multiplexing (COFDM) signal, which is demodulated and detected by front-end STB tuner. The output of the front-end tuner is a 188-byte transport stream packet, which contains both audio and video data. The STB back-end, which contains a CPU, decodes these transport stream packets and decoded audio/video data is fed to television. For audio/video time synchronization, a 27 MHz VCXO is used in the STB back-end. In practical scenario (DVB communication), transport stream is received by an antenna and the antenna output is fed to an STB front-end.

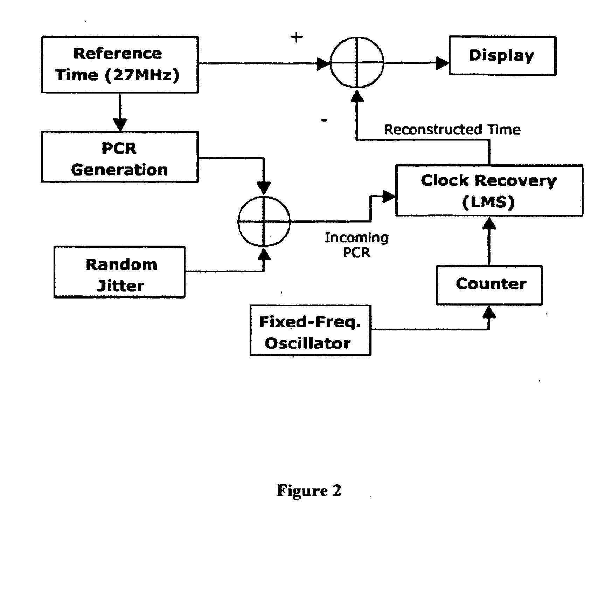

Figure 2 shows an existing system for clock recovery as disclosed by the publication entitled: 'A new method of clock recovery in mpeg decoders' by Hooman Hassanzadegan and Nima Sarshar, Iran. It shows the addition of a random value to the PCR value generated in the PCR generation block to indicate jitter. The simulation results show that the time spacing between every two consecutive PCRs is 0.1 second.

The drawback in the above mentioned system is that the computation involved for clock recovery requires complex and high cost apparatus.

Methods and systems for clock recovery in digital video communication are also known from the European Patent Application No. 0 836 282 in the name of Sony Corporation, from the PCT application No. WO 01/93579 in the name of Next Level Communications L.P. and from the US Patent No. 5,828,414 in the name of Perkins et al.

Correct clock recovery at Set Top Box (STB) receiver side is very essential for audio/video synchronization. However, there are several factors, which lead to degradation in clock recovery process. Some of these are:

The difference between the transmitter system clock frequency and the receiver STC frequency (Frequency of the voltage controlled oscillator).

Introduction of a significant amount of jitter by communication channel.

Delay introduced by the inner interleaving and de-interleaving blocks in the transmitter and receiver side (particularly in DVB-TERRESTRIAL transmission).

In worse channel conditions (such as ¼ guard interval, channel fading, low carrier-to-noise ratio etc.), arrival of Program Clock Reference (PCR) packets gets delayed as STB tuner front-end takes much time to detect and demodulate the signal.

In DVB-Terrestrial (DVB-T) communication, uncertain arrival of PCR packets at the receiver end causes serious problems in synchronization of receiver system clock with that of the transmitter.

The conventional methods available to overcome this aspect cannot reduce all the problems, specifically in worse channel conditions. Problems as color loss, jittery video, audio dropouts still persist. Apart from this, existing methods are having high computational overhead.

Thus, a need is felt for a clock recovery system that overcomes the clock recovery problems in the presence of PCR packet jitters in digital video communication.

Summary of the Invention

It is an object of the present invention to provide a system for clock recovery in digital communication.

It is another object of the present invention to compute the average arrival time of the PCR packets.

It is further an object of the present invention to synchronize the average arrival time of the PCR packets with the System Clock Frequency.

It is yet another object of the present invention to provide a low complexity and low-cost solution to clock recovery problem in the presence of large clock jitter in DVB-T communication.

To achieve said objectives the present invention provides a system for clock recovery in digital communication as claimed in claim 1.

Further, the present invention provides a method for clock recovery in a digital video communication system as claimed in claim 8.

In DVB-T operation, irregularity in the arrival of PCR packets at the receiver causes serious problems in synchronization of receiver system clock with that of the transmitter. To overcome this problem, a low complexity, low-cost clock recovery algorithm is proposed that corrects the voltage-controlled oscillator (VCXO) at the receiver end by predicting an average PCR difference value at regular time interval instead of waiting for the delayed packets to arrive. The proposed algorithm recovers the lost synchronization of transmitter and receiver even in worse channel conditions (such as ¼ guard interval, channel fading, low carrier-to-noise ratio etc.). In addition, it enjoys the benefit of very little computation overhead.

Brief description of the accompanying drawings:

The invention will now be described with reference to the accompanying drawings.

Figure 1 illustrates a conventional system set up for clock recovery application.

Figure 2 illustrates another existing system for clock recovery in MPEG decoders.

Figure 3 shows the system for clock recovery in digital video communication in accordance with the instant invention.

Figure 4 shows the flow diagram of the method of clock recovery in accordance with the instant invention.

Figure 5 shows the graph of STC and PCR difference value against sample number for the clock recovery system in accordance with the instant invention.

Figure 6 shows the graph of frequency error value against sample number for the clock recovery system in accordance with the instant invention.

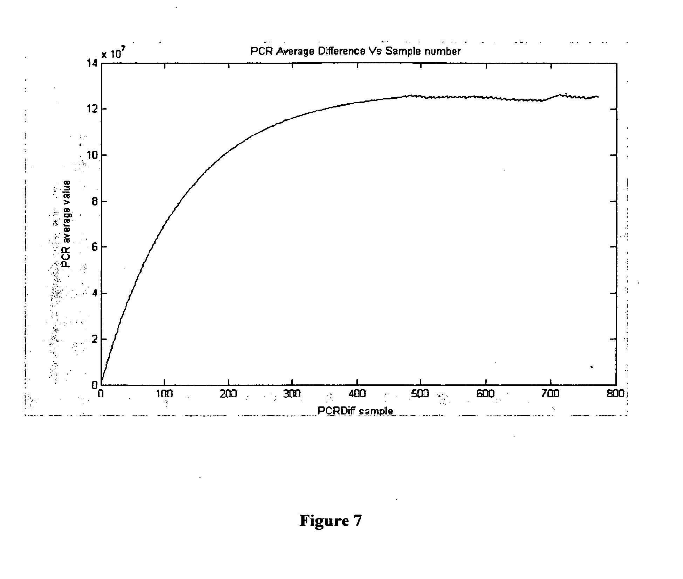

Figure 7 shows the graph of PCR average filter output convergence to actual average of PCR Difference value (filter output value vs. plot of filter output sample number) according to the instant invention.

Detailed description of the invention

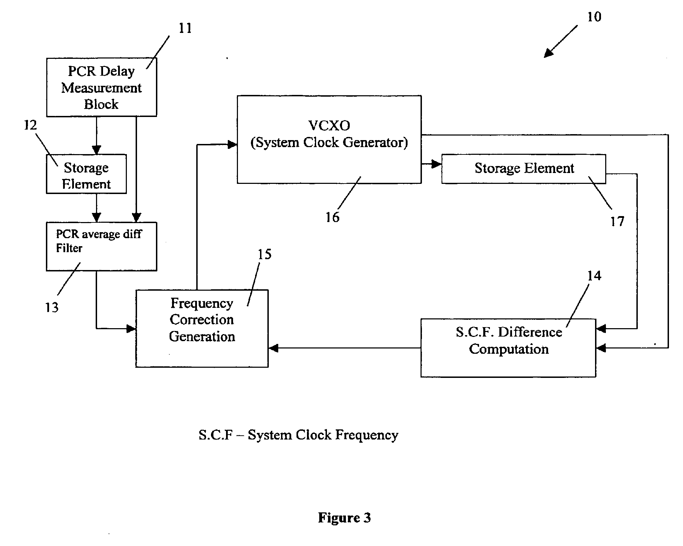

The block diagram of the clock recovery system in accordance with the instant invention is shown in Figure 3, wherein it is shown that the PCR delay measurement block generates the input PCR signals for the clock recovery system and measures the delay between the successive PCR packets. The PCR delay block consists of a logic-parsing device for providing selective PCR packet output, wherein the logic-parsing device comprising a demultiplexing logic for priority based injection of PCR packets into the clock recovery system.

Further, the output from the PCR delay measurement block is fed to a data storage device that comprises a buffers or registers for introducing temporal delay in the incoming PCR data stream. The input PCR signal stream is then fed to the PCR average difference filter that computes the average inter-arrival time between the successive PCR packets. The gain factor of the filter is then compensated by coupling the filter output to a coefficient multiplier.

The gain compensated output is then fed to the differential frequency error minimization device for applying minimization to the error induced in the PCR inter-arrival time.

The system clock outputs are generated from the system clock generator, which is essentially a phase locked loop that generates the system time clock. This system time clock is the generic system clock of the Set Top Box in the digital video communication system. Two system clocks are then generated, wherein the delay between the two system clock outputs is established by introducing a storage device at one of the outputs of the system clock generator. A clock period difference computation element is connected to the output of the system clock generator for computing the difference between the two system clock outputs. The system clock difference is further converted to a differential frequency error minimization device for converting the system clock output difference to a frequency error and applying correction to the same.

In particular, the system for clock recovery in digital video communication according to the invention, schematically shown in figure 3 and globally indicated at 10, comprises a delay measurement block 11 for generating Program Clock Reference (PCR) input signals and for continuously determining time interval between successive Program Clock Reference input signals.

The system 10 also comprises a first storage device 12 connected to an output of the delay measurement block 11 for generating a first Program Clock Reference signal corresponding to the time interval between arrival of successive Program Clock Reference input signals, and a Program Clock Reference inter-arrival time computation filtering device 13 connected at its first input to an output of the first storage device 12 and receiving a second Program Clock Reference signal from the delay measurement block 11 for determining an average time of arrival difference between successive Program Clock Reference packets.

Advantageously, the system 10 also comprises an error correction device 15 connected to an output of the Program Clock Reference inter-arrival time computation filtering device 13 for minimizing the error in the average Program Clock Reference difference between successive Program Clock Reference packets.

Also, a controlled system clock generator 16 is connected to the output of the error correction device 15 to generate system clock, a second storage device 17 being in turn connected at the output of the controlled system clock generator 16 for generating a first system clock output signal.

Finally, the system 10 comprises a controlled clock period difference computation element 14 having a first input connected to a first clock system output of the second storage element 17 and a second input connected to a second system clock output of the controlled system clock generator 16, for computing the clock period difference between first and second system clock signals at said first and second system clock outputs.

In particular, the controlled clock period difference computation element 14 is coupled at its output to the error correction device 15 to form a feedback loop for minimizing the error between the system clock signals and successive Program Clock Reference differences observed.

As already pointed out, according to preferred embodiments of the system 10 according to the present invention, the delay measurement block 11 comprises a signal parsing device, in turn comprising a demultiplexing logic device.

Also, the Program Clock Reference inter-arrival time computation filtering device 13 comprises an Infinite Impulse Response filter coupled to a timer.

Moreover, the controlled system clock generator 16 comprises a Phase Locked Loop device, while the first and second storage devices 12 and 17 comprise at least one register.

Finally, the controlled clock period difference computation element 14 comprises a voltage-to-frequency conversion device.

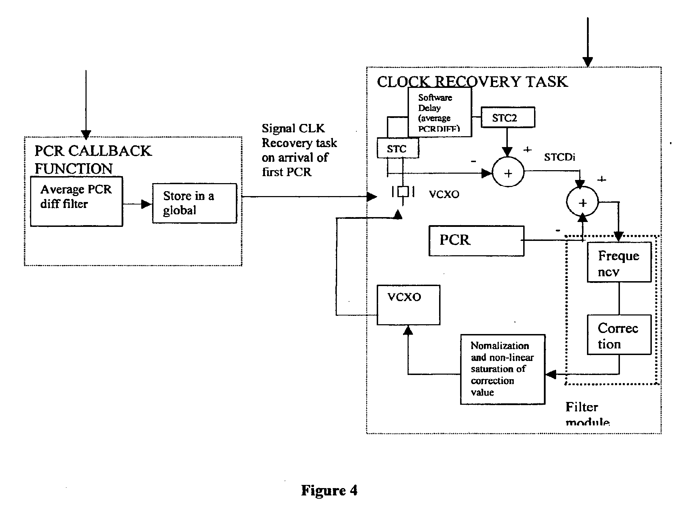

Figure 4 shows the flow diagram of the method of clock recovery in accordance with the instant invention. PCR call back function determines the time interval between successive input PCR signals. the block which performs PCR call back task the average PCR difference is calculated on the arrival of PCR packets and the same is stored in a global database. the PCR call back function and the clock recovery are running concurrently, and these functions can be concurrently executed in a real time operating system. the PCR call back function invokes the clock recovery task on arrival of the first PCR packet. in the section which performs clock recovery task, the voltage controlled oscillator at the receiver (VCXO) is corrected at regular interval rather than waiting for PCR event to occur on arrival of PCR packets. This interval duration is calculated as the average PCR inter arrival time. This time interval is used to set a timer after reading the STC value (the STC value is read from the VCXO). On expiry of this timer interval, STC value is read again. Then from the differences of STC values, frequency error is calculated. Frequency error is calculated using the following equations:

$$\text{Difference} = (\text{STCcurrent} - \text{PCRcurrent})$$

$$\text{PCRTickDiff} = (\text{PCRcurrent} - \text{PCRprevious})$$

$$\text{TickError} = (\text{STCcurrent}-\text{PCRcurrent})-(\text{STCprevious}-\text{PCRprevious})$$

$$\text{TimeError} = 27000000/ \text{PCRTickDiff}$$

$$\text{FreqError} = \text{TickError} * \text{TimeError}$$

$$\text{FreqError} = (\text{TickError} * 27000000)/ \text{PCRTickDiff}.$$

From the frequency error, correction value is calculated. VCXO is then set by the correction value.

In essence, the invention provides a method for clock recovery in digital video communication comprising steps of:

- determining time interval between successive input PCR signals,

- computing average time difference between successive PCR packets,

- computing the average difference between successive system clock signals,

- minimizing the error between successive PCR packets and system clock signals, and

- generating successive system clock signals.

Advantageously according to the invention, the step of determining time interval between successive input PCR signals is substantially a step of determining delay between successive system clock signals, the determining delay being, according to a preferred embodiment of the method according to the invention, a parsing the input PCR signal stream.

In particular, the parsing the input PCR signal stream is demultiplexing the input PCR signal stream for generating the PCR packets.

Moreover, the computing average time duration difference is applying filtering on PCR packets to compute the average inter-arrival time of the PCR packets, such filtering being correcting the frequency of system clock signals at regular intervals rather than waiting for the arrival of the PCR packets.

In a preferred embodiment, such correcting the frequency of system clock signals at regular intervals is confirming said regular intervals to the average PCR inter-arrival time and confirming is determining the system clock value at the commencement and termination of said inter-arrival time.

Furthermore, the generating successive system clock signals is generating at least two delayed system clock outputs.

Finally, the computing the average difference between successive system clock signals is converting the average difference between successive system clock signals to frequency error.

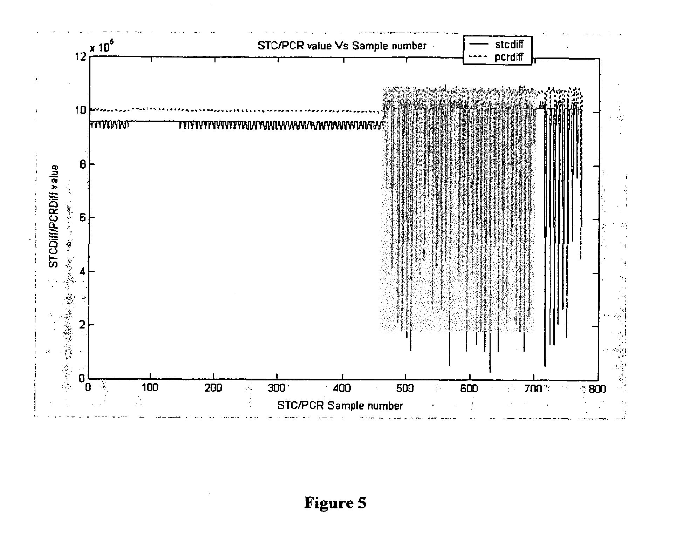

Due to the uncertain arrival of PCR packets at the receiver, frequency error value remains unstable and thus the synchronization is lost for receiver system clock. Use of proposed method overcomes this problem. The figure 5 shows the graph of frequency error value Vs sample number for the proposed clock recovery method. It is clear from the graph that frequency error value becomes stable after some time duration, and thus solves the above-mentioned problem.

Average PCR difference is calculated using a simple IIR filter having very low computational complexity. A large time constant i.e. $|\tau| \approx 1.0$ is used to maintain a stable value of the computed average.

Transfer function of the filter is,

$$H(z) = \frac{Y(z)}{X(z)} = \frac{1}{1 - (1 - \frac{1}{128})z^{-1}}$$

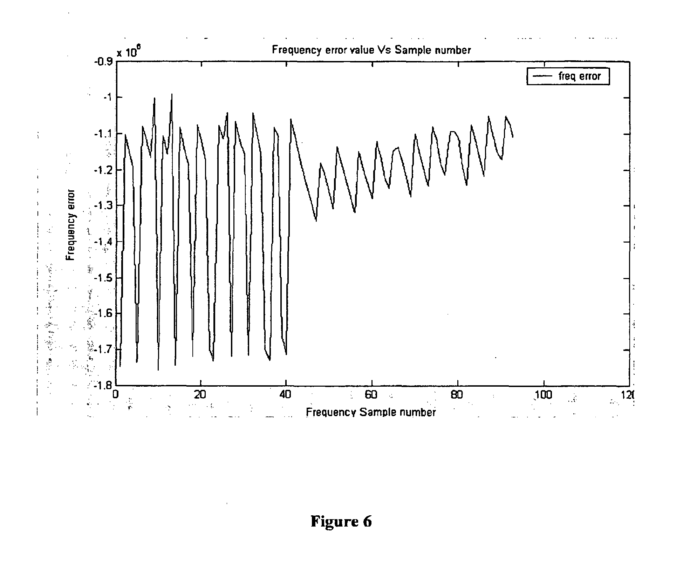

As the time constant coefficient is 1- 1/128, the filter is implemented with simple shift and addition operations. So the computational overhead is very low for designing this filter. The filter characteristic is shown in figure 6.

The graph plotted in figure 6 shows that after arrival of 500 PCR packets, the output of the filter (the average PCR difference value) converges to a stable state. The average PCR difference is updated with the arrival of every new PCR packet.

Due to PCR jitters in DVB-T transmission, the difference between STCdiff and PCRdiff values may change arbitrarily, causing loss of synchronization in the receiver side. Use of the proposed algorithm rectifies this problem. Figure 5 shows the graph of STC and PCR DIFF value against sample number for the proposed clock recovery method. This figure reveals that the difference between STCdiff and PCRdiff remains constant throughout the whole measurement.

The output of the filter is multiplied by the coefficient 1/128 to compensate for the gain factor of the filter. This multiplication is implemented as a left shift.

| Instruction / function | Addition/subtraction | Multiplication | Division | Shift |
|---|---|---|---|---|
| PCR call back Task | 6 | 2 | 0 | 3 |

(continued)

| Instruction / function | Addition/subtraction | Multiplication | Division | Shift |
|---|---|---|---|---|
| Clock recovery task | 6 | 6 | 3 | 0 |
| Filter module | 1 | 1 | 1 | 2 |
| Total | 13 | 9 | 4 | 5 |

The table provided above shows that 31 arithmetic operations are executed in every average PCR difference interval. It is observed that average PCR difference is approximately 35 milliseconds. Therefore, the average computational overhead for the proposed clock recovery algorithm/ method in terms of arithmetic operations executed per second is:

$$31/35 *1000 = 886 \text{ arithmetic operations per second.}$$

The proposed algorithm is also tested in worse channel conditions like ¼ guard interval, with channel fading, low carrier-to-noise ratio etc. Result shows that:

1. Color loss is mitigated.

2. Video jitter mitigated.

3. Audio dropout is not present.

4. Very low computational overhead.

Thus, the system and method for clock recovery provides a deterministic and minimal computation behavior to the digital video communication clock recovery set up.

**Claims**

1.   A system (10) for clock recovery in digital video communication comprising:

- a delay measurement block (11) for generating Program Clock Reference (PCR) input signals and for continuously determining time interval between successive Program Clock Reference input signals,
- a first storage device (12) connected to an output of said delay measurement block (11) for introducing temporal delay and outputting a first Program Clock Reference signal corresponding to said time interval between arrival of successive Program Clock Reference input signals,
- a Program Clock Reference inter-arrival time computation filtering device (13) which comprises an Infinite Impulse Response filter coupled to a timer and is connected at its first input to an output of said first storage device (12) and receiving a second Program Clock Reference signal from said delay measurement block (11) for determining an average time of arrival difference between successive Program Clock Reference packets by applying filtering on Program Clock Reference packets,
- an error correction device (15) connected to an output of said Program Clock Reference inter-arrival time computation filtering device (13) for minimizing the error in the average Program Clock Reference difference between successive Program Clock Reference packets by converting the average difference between successive system clock signals to frequency error,
- a controlled system clock generator (16) which comprises a Phase Locked Loop device and is connected to the output of said error correction device (15) to generate system clock,
- a second storage device (17) connected at the output of said controlled system clock generator (16) for generating a first system clock output signal,
- a controlled clock period difference computation element (14) which comprises a voltage-to-frequency conversion device and has a first input connected to a first clock system output of said second storage element (17) and a second input connected to a second system clock output of said controlled system clock generator (16), for computing the clock period difference between first and second system clock signals at said first and second system clock outputs

said controlled clock period difference computation element (14) being coupled at its output to said error correction device (15) to form a feedback loop for minimizing the error between said system clock signals and successive Program Clock Reference differences observed by correcting a frequency of said system clock signals at regular interval.

2. A system for clock recovery as claimed in claim 1, wherein said delay measurement block (11) comprises a signal parsing device.

3. A system for clock recovery as claimed in claim 2, wherein said signal parsing device comprises a demultiplexing logic device.

4. A system for clock recovery as claimed in claim 1, wherein said Infinite Impulse Response filter has a transfer function equal to

$$H(z) = \frac{Y(z)}{X(z)} = \frac{1}{1 - (1 - \frac{1}{128})z^{-1}} \; .$$

and comprises shift and addition blocks.

5. A system for clock recovery as claimed in claim 1, wherein said first and second storage devices (12, 17) comprise at least one register.

6. A method for clock recovery in digital video communication comprising steps of:

   - generating Program Clock Reference (PCR) input signals;
   - determining time interval between successive input Program Clock Reference signals by determining delay between successive system clock signals,
   - introducing temporal delay and outputting a first Program Clock Reference signal corresponding to said time interval between arrival of successive Program Clock Reference input signals;
   - computing average inter-arrival time between successive Program Clock Reference packets by applying filtering on Program Clock Reference packets,
   - converting the average difference between successive system clock signals to frequency error,
   - computing the clock period difference between first and second system clock signals;
   - minimizing the error between successive Program Clock Reference packets and system clock signals by correcting a frequency of said system clock signals at regular interval, and
   - generating successive system clock signals.

7. A method for clock recovery as claimed in claim 6, wherein said determining delay is parsing the input Program Clock Reference signal stream.

8. A method for clock recovery as claimed in claim 7, wherein said parsing the input PCR signal stream is demultiplexing the input Program Clock Reference signal stream for generating the Program Clock Reference packets.

9. A method for clock recovery as claimed in claim 6, wherein said correcting the frequency of system clock signals at regular intervals is confirming said regular intervals to the average Program Clock Reference inter-arrival time.

10. A method for clock recovery as claimed in claim 9, wherein said confirming is determining the system clock value at the commencement and termination of said inter-arrival time.

11. A method for clock recovery as claimed in claim 7, wherein said generating successive system clock signals is generating at least two delayed system clock outputs.

12. A method for clock recovery as claimed in claim 7, wherein said filtering is an Infinite Impulse Response according to the following a transfer function equal to

$$H(z) = \frac{Y(z)}{X(z)} = \frac{1}{1 - (1 - \frac{1}{128})z^{-1}}$$

## Patentansprüche

1. System (10) zur Taktwiedergewinnung bei der digitalen Videokommunikation, umfassend:

- einen Verzögerungsmessungsblock (11) zum Erzeugen von Programmtaktreferenz- bzw. PCR-Eingangssignalen und zum kontinuierlichen Bestimmen des Zeitintervalls zwischen sukzessiven Programmtaktreferenz-Eingangs-signalen,
- eine mit einem Ausgang des Verzögerungsmessungs-blocks (11) verbundene erste Speichervorrichtung (12) zum Einführen von zeitlicher Verzögerung und Ausgeben eines ersten Programmtaktreferenzsignals, das dem Zeitintervall zwischen Ankunft sukzessiver Programmtaktreferenz-Eingangssignale entspricht,
- eine Programmtaktreferenz-Zwischenankunftszeit-Berechnungsfilterungsvorrichtung (13), die ein mit einem Timer gekoppeltes Infinite-Impulse-Response-Filter umfasst und an ihrem ersten Eingang mit einem Ausgang der ersten Speichervorrichtung (12) verbunden ist und ein zweites Programmtaktreferenzsignal von dem Verzögerungsmessungsblock (11) empfängt, zum Bestimmen einer mittleren Ankunftszeitdifferenz zwischen sukzessiven Programmtaktreferenzpaketen durch Anwendung von Filterung auf Programmtaktreferenzpakete,
- eine mit einem Ausgang der Programmtaktreferenz-Zwischenankunftszeit-Berechnungsfilterungsvorrichtung (13) verbundene Fehlerkorrekturvorrichtung (15) zum Minimieren des Fehlers in der mittleren Programmtaktreferenzdifferenz zwischen sukzessiven Programmtaktreferenzpaketen durch Umsetzen der mittleren Differenz zwischen sukzessiven Systemtaktsignalen in Frequenzfehler,
- einen gesteuerten Systemtaktgenerator (16), der eine Phasenregelkreisvorrichtung umfasst und mit dem Ausgang der Fehlerkorrekturvorrichtung (15) verbunden ist, um einen Systemtakt zu erzeugen,
- eine mit dem Ausgang des gesteuerten Systemtaktgenerators (16) verbundene zweite Speichervorrichtung (17) zum Erzeugen eines ersten SystemtaktAusgangssignals,
- ein gesteuertes Taktperiodendifferenz-Berechnungselement (14), das eine Umsetzungsvorrichtung von Spannung in Frequenz umfasst und einen mit einem ersten Systemtaktausgang des zweiten Speicherelements (17) verbundenen ersten Eingang und einen mit einem zweiten Systemtaktausgang des gesteuerten Systemtaktgenerators (16) verbundenen zweiten Eingang aufweist, zum Berechnen der Taktperiodendifferenz zwischen ersten und zweiten Systemtaktsignalen an dem ersten und zweiten Systemtaktausgang,

wobei das gesteuerte Taktperiodendifferenz-Berechnungselement (14) an seinem Ausgang mit der Fehlerkorrekturvorrichtung (15) gekoppelt ist, um eine Rückkopplungsschleife zur Minimierung des Fehlers zwischen den Systemtaktsignalen und sukzessiven Programmtaktrefe-renzdifferenzen, die durch Korrigieren einer Frequenz der Systemtaktsignale in einem regelmäßigen Intervall beobachtet werden, zu bilden.

2. System zur Taktwiedergewinnung nach Anspruch 1, wobei der Verzögerungsmessungsblock (11) eine Signalanalysevorrichtung umfasst.

3. System zur Taktwiedergewinnung nach Anspruch 2, wobei die Signalanalysevorrichtung eine demultiplexende Logikvorrichtung umfasst.

4. System zur Taktwiedergewinnung nach Anspruch 1, wobei das Infinite-Impulse-Response-Filter eine Übertragungsfunktion gleich

$$H(z) = \frac{Y(z)}{X(z)} = \frac{1}{1 - (1 - \frac{1}{128})z^{-1}}$$

aufweist und Schiebe- und Additionsblöcke umfasst.

**5.** System zur Taktwiedergewinnung nach Anspruch 1, wobei die erste und zweite Speichervorrichtung (12, 17) mindestens ein Register umfassen.

**6.** Verfahren zur Taktwiedergewinnung bei der digitalen Videokommunikation, mit den folgenden Schritten:

- Erzeugen von Programmtaktreferenz- bzw. PCR-Eingangssignalen;
- Bestimmen des Zeitintervalls zwischen sukzessiven Eingangsprogrammtaktreferenzsignalen durch Bestimmen der Verzögerung zwischen sukzessiven Systemtaktsignalen,
- Einführen von zeitlicher Verzögerung und Ausgeben eines ersten Programmtaktreferenzsignals, das dem Zeitintervall zwischen Ankunft sukzessiver Programmtaktreferenz-Eingangssignale entspricht;
- Berechnen der mittleren Zwischenankunftszeit zwischen sukzessiven Programmtaktreferenzpaketen durch Anwendung von Filterung auf Programmtaktreferenzpakete,
- Umsetzen der mittleren Differenz zwischen sukzessiven Systemtaktsignalen in Frequenzfehler,
- Berechnen der Taktperiodendifferenz zwischen ersten und zweiten Systemtaktsignalen;
- Minimieren des Fehlers zwischen sukzessiven Programmtaktreferenzpaketen und Systemtaktsignalen durch Korrigieren einer Frequenz der Systemtaktsignale in einem regelmäßigen Intervall und
- Erzeugen sukzessiver Systemtaktsignale.

**7.** Verfahren zur Taktwiedergewinnung nach Anspruch 6, wobei die Bestimmungsverzögerung den Eingangs-Programmtaktreferenzsignalstrom analysiert.

**8.** Verfahren zur Taktwiedergewinnung nach Anspruch 7, wobei das Analysieren des Eingangs-PCR-Signalstroms den Eingangs-Programmtaktreferenzs ignalstrom zur Erzeugung der Programmtaktreferenzpakete demultiplext.

**9.** Verfahren zur Taktwiedergewinnung nach Anspruch 6, wobei das Korrigieren der Frequenz von Systemtaktsignalen in regelmäßigen Intervallen die regelmäßigen Intervalle bezüglich der mittleren Programmtaktreferenz-Zwischenankunftszeit bestätigt.

**10.** Verfahren zur Taktwiedergewinnung nach Anspruch 9, wobei das Bestätigen den Systemtaktwert beim Beginn und Abschluss der Zwischenankunftszeit bestimmt.

**11.** Verfahren zur Taktwiedergewinnung nach Anspruch 7, wobei das Erzeugen sukzessiver Systemtaktsignale mindestens zwei verzögerte Systemtaktausgaben erzeugt.

**12.** Verfahren zur Taktwiedergewinnung nach Anspruch 7, wobei die Filterung eine Infinite-Impulse-Response gemäß der folgenden Übertragungsfunktion ist:

$$H(z) = \frac{Y(z)}{X(z)} = \frac{1}{1 - (1 - \frac{1}{128})z^{-1}}.$$

**Revendications**

**1.** Système (10) de récupération d'horloge dans une communication vidéo numérique comprenant :

- un bloc de mesure de retard (11) destiné à générer des signaux d'entrée de Référence d'Horloge de Programme (PCR, Program Clock Reference) et à déterminer en continu un intervalle de temps entre des signaux d'entrée de Référence d'Horloge de Programme successifs,
- un premier dispositif de stockage (12) connecté à une sortie dudit bloc de mesure de retard (11) pour introduire un retard temporel et fournir en sortie un premier signal de Référence d'Horloge de Programme correspondant audit intervalle de temps entre l'arrivée de signaux d'entrée de Référence d'Horloge de Programme successifs,
- un dispositif de filtrage par calcul de temps d'inter-arrivée de Référence d'Horloge de Programme (13) qui comprend un filtre à Réponse Impulsionnelle Infinie relié à un temporisateur et est connecté au niveau de sa première entrée à une sortie dudit premier dispositif de stockage (12) et recevant un second signal de Référence d'Horloge de Programme en provenance dudit bloc de mesure de retard (11) pour déterminer une différence de temps d'arrivée moyenne entre des paquets de Référence d'Horloge de Programme successifs en appliquant un filtrage à des paquets de Référence d'Horloge de Programme,

- un dispositif de correction d'erreur (15) connecté à une sortie dudit dispositif de filtrage par calcul du temps d'inter-arrivée de Référence d'Horloge de Programme (13) pour minimiser l'erreur affectant la différence de Référence d'Horloge de Programme moyenne entre des paquets de Référence d'Horloge de Programme successifs en convertissant la différence moyenne entre des signaux d'horloge système successifs en une erreur de fréquence,

- un générateur d'horloge système commandé (16) qui comprend un dispositif à boucle verrouillée en phase et est connecté à la sortie dudit dispositif de correction d'erreur (15) afin de générer une horloge système,

- un second dispositif de stockage (17) connecté à la sortie dudit générateur d'horloge système commandé (16) pour générer un premier signal de sortie d'horloge système,

- un élément de calcul de différence de période d'horloge commandé (14) qui comprend un dispositif de conversion tension-fréquence et comporte une première entrée connectée à une première sortie d'horloge système dudit second élément de stockage (17) et une seconde entrée connectée à une seconde sortie d'horloge système dudit générateur d'horloge système commandé (16), pour calculer la différence de période d'horloge entre les premier et second signaux d'horloge système desdites première et seconde sorties d'horloge système, ledit élément de calcul de différence de période d'horloge commandé (14) étant relié au niveau de sa sortie audit dispositif de correction d'erreur (15) afin de former une boucle de rétroaction destinée à minimiser l'erreur entre lesdits signaux d'horloge système et des différences de Référence d'Horloge de Programme successives observées en corrigeant une fréquence desdits signaux d'horloge système à un intervalle régulier.

2. Système de récupération d'horloge selon la revendication 1, dans lequel ledit bloc de mesure de retard (11) comprend un dispositif d'analyse syntaxique des signaux.

3. Système de récupération d'horloge selon la revendication 2, dans lequel ledit dispositif d'analyse syntaxique des signaux comprend un dispositif logique de démultiplexage.

4. Système de récupération d'horloge selon la revendication 1, dans lequel ledit filtre à Réponse Impulsionnelle Infinie présente une fonction de transfert égale à

$$H(z) = \frac{Y(z)}{X(z)} = \frac{1}{1-\left(1-\frac{1}{128}\right)z^{-1}},$$

et comprend des blocs de décalage et d'addition.

5. Système de récupération d'horloge selon la revendication 1, dans lequel lesdits premier et second dispositifs de stockage (12, 17) comprennent au moins un registre.

6. Procédé de récupération d'horloge dans une communication vidéo numérique comprenant les étapes consistant à :

- générer des signaux d'entrée de Référence d'Horloge de Programme (PCR) ;
- déterminer un intervalle de temps entre des signaux de Référence d'Horloge de Programme d'entrée successifs en déterminant un retard entre des signaux d'horloge système successifs,
- introduire un retard temporel et fournir en sortie un premier signal de Référence d'Horloge de Programme correspondant audit intervalle de temps entre l'arrivée de signaux d'entrée de Référence d'Horloge de Programme successifs ;
- calculer un temps d'inter-arrivée moyen entre des paquets de Référence d'Horloge de Programme successifs en appliquant un filtrage à des paquets de Référence d'Horloge de Programme,
- convertir la différence moyenne entre des signaux d'horloge système successifs en une erreur de fréquence,
- calculer la différence de période d'horloge entre des premier et second signaux d'horloge système ;
- minimiser l'erreur entre des paquets de Référence d'Horloge de Programme successifs et des signaux d'horloge système en corrigeant une fréquence desdits signaux d'horloge système à un intervalle régulier, et
- générer des signaux d'horloge système successifs.

**7.** Procédé de récupération d'horloge selon la revendication 6, dans lequel ladite détermination du retard consiste à analyser syntaxiquement le flux de signaux de Référence d'Horloge de Programme d'entrée.

**8.** Procédé de récupération d'horloge selon la revendication 7, dans lequel ladite analyse syntaxique du flux de signaux PCR d'entrée consiste à démultiplexer le flux de signaux de Référence d'Horloge de Programme d'entrée afin de générer les paquets de Référence d'Horloge de Programme.

**9.** Procédé de récupération d'horloge selon la revendication 6, dans lequel ladite correction de la fréquence de signaux d'horloge système à des intervalles réguliers consiste à confirmer lesdits intervalles réguliers par rapport au temps d'interarrivée de Référence d'Horloge de Programme moyen.

**10.** Procédé de récupération d'horloge selon la revendication 9, dans lequel ladite confirmation consiste à déterminer la valeur de l'horloge système au commencement et à la fin dudit temps d'inter-arrivée.

**11.** Procédé de récupération d'horloge selon la revendication 7, dans lequel ladite génération de signaux d'horloge système successifs consiste à générer au moins deux sorties d'horloge système retardées.

**12.** Procédé de récupération d'horloge selon la revendication 7, dans lequel ledit filtrage est une Réponse Impulsionnelle Infinie conforme à la fonction de transfert suivante, qui est égale à

$$H(z) = \frac{Y(z)}{X(z)} = \frac{1}{1 - \left(1 - \frac{1}{128}\right)z^{-1}}.$$

COFDM
signal

Tuner

TV

DVB-T
Modulator

Digital STB
Backend
System

Packet
Inject
or

MPEG2
Transport
Stream

**Figure 1**

**Figure 2**

S.C.F – System Clock Frequency

**Figure 3**

**Figure 4**

**Figure 5**

Figure 6

**Figure 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0836282 A
- WO 0193579 A
- US 5828414 A, Perkins